# EUROPEAN PATENT APPLICATION

(11) **EP 4 524 601 A2**
(43) Date of publication of application: **19.03.2025**
(21) Application number: 24195790.1
(22) Date of filing: 22.08.2024
(51) Int. Cl.: G01S 7/00, G01S 7/481, G01S 17/931, G02B 6/43, H04B 10/116, H04J 14/02, H04Q 11/00

(54) **OPTICAL PHASED ARRAYS FOR OPTICAL COMMUNICATIONS AND LIGHT DETECTION AND RANGING SYSTEMS**

(30) Priority: 15.09.2023 US 202318468114
(71) Applicant: X Development LLC, Mountain View, CA 94043 (US)
(72) Inventor: PALESE, Stephen, Redondo Beach (US); CIERNY, Ondrej, Mountain View, 94043 (US); EPP, Paul, Sunnyvale (US)
(74) Representative: Derry, Paul Stefan

(57) **Abstract**

Aspects of the disclosure relate to an optical phased array (OPA) architecture for a device capable of transmitting and receiving both optical communications signals and light detection and ranging (LIDAR) signals. The OPA architecture may involve the use of a single OPA chip with a plurality of photonic integrated circuits (PIC). In this regard, the transmitters and receivers (or transceivers) of the OPA architecture may include switches. The transceiver switch may enable changing between transmitting and receiving optical communications signals and LIDAR signals.

## Description

### BACKGROUND

Wireless optical communication enables high-throughput and long-range communication, in part due to high gain offered by the narrow angular width of the transmitted beam. However, the narrow beam also requires that it must be accurately and actively pointed in order to remain aligned to an aperture of a communications terminal at the remote end. This pointing may be accomplished by small mirrors (e.g., MEMS or voice-coil based fast-steering mirror mechanisms) that are actuated to steer the beam. In other implementations, electro-optic steering of beams with no moving parts is used to steer the beam, which provides cost, lifetime and performance advantages. Optical Phased Arrays (OPAs) are a critical technology component, with added benefits of adaptive-optics, point-to-multipoint support, and mesh network topologies. Each active element in the OPA requires electro-optic phase shifting capability.

Light detection and ranging (LIDAR) systems allow for the receipt of point cloud data across a scanned region. LIDAR systems for autonomous vehicle applications generally utilize mechanical (rotating mirror) and/or micro-electro-mechanical systems (MEMS) mirrors to scan signals across the scene of interest.

### BRIEF SUMMARY

Aspects of the disclosure provide a first device. The first device comprising an optical phased array (OPA) including a photonic integrated circuit (PIC) comprising a plurality of phase shifters arranged in a plurality of segments; one or more additional phase shifters, a plurality of switches corresponding to each of the plurality of segments; and a plurality of switches corresponding to each of the plurality of segments, the plurality of switches configured to be placed in one of i) a first position or ii) a second position, wherein the first position allows for joint functionality of the plurality of segments and wherein the second position allows for independent functionality of the plurality of segments; and a plurality of transceivers, each of the plurality of transceivers comprising a transceiver switch, wherein each a transceiver switch is configured to be placed in in one of i) a first position or ii) a second position, wherein the first position allows for a signal to be received by a LIDAR receiver of the plurality of transceivers and the second position allows for a signal to be received by an optical communications receiver of the plurality of transceivers.

In one example, the first device is an autonomous vehicle.

In another example, the plurality of transceivers includes a full array transceiver and a plurality of segment transceivers.

In a further example, the plurality of transceivers each further includes a laser source configured to produce a signal, and a phase modulator operatively connected to the laser source and configured to encode signal information onto signals therefrom. In a further example, the plurality of transceivers each further includes a local oscillator (LO) phase modulator for LIDAR configured to modulate received signals using light from the laser source, and a LO phase modulator for optical communications configured to modulate received signals using light from the laser source. In an additional example, the plurality of transceivers each further includes wavelength and phase locking electronics operatively coupled to the LO phase modulator for LIDAR signals and the LO phase modulator for optical communications and configured to allow specific ranges of wavelengths or specific phases of photons of a signal to be received.

In another example, the plurality of transceivers each further includes a LIDAR receiver configured to receive LIDAR signals when the transceiver switch is in the first position; and an optical communications receiver configured to receive optical communications signals when the transceiver switch is in the second position.

In an additional example, the plurality of transceivers each further includes one or more semiconductor optical amplifiers configured to amplify a signal to be transmitted.

In a further example, the plurality of transceivers each further includes a circulator configured to route incoming and outgoing signals while keeping them on at least partially separate paths.

In another example, the plurality of transceivers each include separate transmitter and receiver components. In a further example, the transmitter components of the plurality of transceivers are contained on a first PIC and the receiver components of the plurality of transceivers are contained on a second PIC.

Another aspect of the disclosure provides a method of detecting a plurality of objects in an environment of a first autonomous vehicle. The method comprising placing a plurality of switches of an optical phased array (OPA) architecture of the first autonomous vehicle into a first position wherein the first position allows for j oint functionality of a plurality of segments, wherein a plurality of phase shifters are arranged in the plurality of segments; transmitting, via a full array transmitter of the OPA architecture of the first autonomous vehicle, a first LIDAR signal, the first LIDAR signal spanning a field of view (FOV) of an OPA architecture of the first autonomous vehicle; receiving, via a full array receiver of the OPA architecture of the first autonomous vehicle, a first reflected LIDAR signal, the first reflected LIDAR signal being a reflection of the first LIDAR signal containing information regarding objects in the environment of the first autonomous vehicle; identifying, by one or more processors of the first autonomous vehicle, a plurality of areas of interest in the environment of the first autonomous vehicle based on the first reflected LIDAR signal; placing a plurality of switches of the OPA architecture of the first autonomous vehicle into a second position, wherein the second position allows for independent functionality of the plurality of segments; driving, by the one or more processors of the first autonomous vehicle, the plurality of phase shifters of the plurality of segments, such that a FOV of each segment corresponds to one of the plurality of areas of interest; transmitting, via a plurality of segment transmitters of the OPA architecture of the first autonomous vehicle, a plurality of LIDAR signals, the plurality of LIDAR signals each spanning the FOV of each corresponding segment; receiving, via a plurality of segment receivers of the OPA architecture of the first autonomous vehicle, a reflected plurality of LIDAR signals, the reflected plurality of LIDAR signals being reflections of the plurality of LIDAR signals containing information regarding a plurality of objects in the plurality of areas of interest; and detecting the plurality of objects in the environment of the first autonomous vehicle based on the reflected plurality of LIDAR signals.

In one example, the full array transmitter and receiver are a full array transceiver and the segment transmitters and segment receivers are segment transceivers.

In an additional example, transmitting, via the full array transmitter of the OPA architecture of the first autonomous vehicle, the first LIDAR signal includes transmitting a plurality of first LIDAR signals; and receiving, via the full array receiver of the OPA architecture of the first autonomous vehicle, the first reflected LIDAR signal includes receiving a first reflected plurality of LIDAR signals. In a further example, the method further includes dithering the first plurality of LIDAR signals.

Another aspect of the disclosure provides a method of receiving information regarding an environment of a first vehicle. The method comprising detecting an object in an environment of a first autonomous vehicle, wherein the object is a remote autonomous vehicle, the remote autonomous vehicle is at least partially within a FOV of an OPA architecture of the first autonomous vehicle, and wherein the detecting occurs while one or more of a plurality of transceiver switches are in a first position, the first position allowing for a signal to be received by a LIDAR receiver; transmitting, via one of a plurality of transmitters of an OPA architecture of the first autonomous vehicle, an optical communications signal to the detected object; and receiving, via one of a plurality of receivers of the OPA architecture of the first autonomous vehicle, an optical communications signal from the detected object, wherein the optical communications signal from the detected object includes information regarding the environment of the first vehicle.

In one example, the remote autonomous vehicle is at least partially occluding the FOV of the first autonomous vehicle.

In another example, receiving, via one of the plurality of receivers of the OPA architecture of the first autonomous vehicle, the optical communications signal from the detected object occurs when one or more or more of the plurality of transceiver switches is in a second position, the second position allowing for a signal to be received by an optical communications receiver.

In an additional example, transmitting, via one of the plurality of transmitters of an OPA architecture of the first autonomous vehicle, the optical communications signal to the detected object includes transmitting a plurality of optical communications signals to the detected object. In another example, the method further includes dithering the plurality of optical communications signals.

### BRIEF DESCRIPTION OF THE DRAWINGS

FIGURE 1A is a block diagram 100a of a first device and a second device in accordance with aspects of the disclosure.
FIGURE 1B is a block diagram 100b of a first device in accordance with aspects of the disclosure.
FIGURE 2 is a pictorial diagram 200 of an example system architecture for the first device of FIGURES 1A-B in accordance with aspects of the disclosure.
FIGURES 3A-B include example transceiver structures 300a-b in accordance with aspects of the disclosure.
FIGURE 4 represents features of an OPA architecture represented as an example OPA chip in accordance with aspects of the disclosure.
FIGURE 5 illustrates an example device in accordance with aspects of the disclosure.
FIGURE 6 is a flow diagram in accordance with aspects of the disclosure.
FIGURE 7 is a flow diagram in accordance with aspects of the disclosure.

### DETAILED DESCRIPTION

### OVERVIEW

The technology relates to an optical phased array (OPA) architecture for a device capable of transmitting and receiving both optical communications signals and light detection and ranging (LIDAR) signals. The OPA architecture may involve the use of a single OPA chip with a plurality of photonic integrated circuits (PIC). In this regard, the transmitters and receivers (or transceivers) of the OPA architecture may include switches. The transceiver switch may enable changing between transmitting and receiving optical communications signals and LIDAR signals.

Generally, transmitting (Tx) and receiving (Rx) both optical communications signals and LIDAR signals requires two separate architectures (e.g., an optical communications architecture and a LIDAR architecture). Having a system with two structures may require extra materials and may be more costly to maintain. Moreover, two structure systems may be slower in compensating for atmospheric aberrations. The slower compensation may lead to decreased coupling efficiencies, slower data rates, and decreased range.

To address this, a first device may include an OPA architecture with transmitters and receivers (or transceivers) with switches to enable changing between transmitting and receiving optical communications signals and LIDAR signals. In some instances, the first device may be a first autonomous vehicle.

The OPA architecture of the first device may be a segmented OPA architecture containing a plurality of segments. Each of the plurality of segments may be configured to transmit and receiver both LIDAR and optical communications signals. Moreover, each of these segments may be contained on the same or differing PICS include a PIC with a plurality of features including a micro-lens array, an emitter associated with each micro-lens, a set of phase shifters for each micro-lens, an emitter for each micro-lens, and waveguides (e.g., optical fibers) that connect the components in the OPA architecture. A plurality of splitters, phase shifters, and may be used to control whether the plurality of segments function independently or in conjunction with one another. Additionally, the first device may include a radio frequency (RF) communications system configured to communicate with one or more remote devices. Additionally, the first device may include a plurality of segmented OPA architectures. The plurality of segmented OPA architectures may have differing fields of view (FOV). The differing fields of view of the plurality of OPA architectures may or may not overlap partially or not at all. Each of the plurality of segments is connected via waveguides (e.g., optical fibers) to a switch. In this regard, the segmented OPA includes a switch for each segment of the plurality of segments.

The plurality of switches may be configured to be in a first or second position. The first position may allow for Tx/Rx joint functionality with other segments of the segmented OPA architecture, whereas the second position may allow for Tx/Rx functionality independent of other segments of the segmented OPA architecture.

The system may contain a plurality of transceivers. One of the plurality of transceivers may be a full array transceiver configured to allow for Tx/Rx functionality with all segments of the plurality of segments, whereas the remaining transceivers may be segment transceivers configured to allow for Tx/Rx functionality with a single segment of the plurality of segments. In addition to the full array transceiver, the plurality of transceivers may include a plurality of segment transceivers, each connected to one of the plurality of switches via waveguides (e.g., optical fibers). In this regard, the plurality of segment transceivers may transmit and receive signals from corresponding segments of the plurality of segments when the corresponding switch is in the second position. Moreover, the full array transceiver may be used to transmit and receive signal from the plurality of segments when the plurality of switches are in the first position.

The transceiver structure may include a laser source, a phase modulator, a local oscillator (LO) phase modulator for LIDAR signals, a LO phase modulator for optical communications, a circulator, a transceiver switch, a LIDAR receiver, and an optical communications receiver.

The transceiver switch may be configured to be in a first position and a second position. The first position may allow for a signal to be received by the LIDAR receiver. The second position may allow for a signal to be received by the optical communications receiver. The switch may be changed from the first position to the second position by one or more processors of the first device based on the type of signal received. For example, a LIDAR signal may be in a first range of wavelengths and or phases, while an optical communications signal may be in a second range of wavelengths and or phases. In this regard, when a received signal is in the first range , the one or more processors may change the transceiver switch to the first position. Similarly, when a received signal is in the second range, the one or more processors may change the transceiver switch to the second position.

In some instances, a first device may include separate OPAs for transmission and receipt of signals. In this regard, the first device may include a transmit OPA and a receive OPA. As such the transceivers may include separate transmitter and receiver components or a first chip with transmitter components and a second chip with receiver components. The receive OPA may be operatively coupled to receiver components and the transmit OPA may be operatively coupled to the transmitter components.

In this regard, the transceiver structure may similarly include a laser source, a phase modulator, a local oscillator (LO) phase modulator for LIDAR signals, a LO phase modulator for optical communications, a switch, a LIDAR receiver, and an optical communications receiver. The switch may be configured to be in a first position and a second position. The first position may allow for a signal to be received by the LIDAR receiver. The second position may allow for a signal to be received by the optical communications receiver. The switch may be changed from the first position to the second position by one or more processors of the first device based on the type of signal received. For example, a LIDAR signal may be in a first range of wavelengths and or phases, while an optical communications signal may be in a second range of wavelengths and or phases. In this regard, when a received signal is in the first range, the one or more processors may change the switch to the first position. Similarly, when a received signal is in the second range, the one or more processors may change the switch to the second position.

As discussed above, in one implementation, the first device may be a first autonomous vehicle. In such an implementation, the OPA architecture of the first autonomous vehicle may be configured to transmit and receive one or more LIDAR signals. Such signals may be used to detect objects in an environment surrounding the first autonomous vehicle. Additionally, the OPA architecture of the first autonomous vehicle may be configured to transmit and receive one or more optical communications signals to one or more remote autonomous vehicles in the environment surrounding the first autonomous vehicle.

In one scenario, the OPA architecture may be used in a method of detecting a plurality of objects in an environment of a first autonomous vehicle. In another scenario, the OPA architecture may be used in a method of receiving information regarding an environment of a first vehicle. In some instances, the information may pertain to an area of the environment occluded by an object.

The features and methodology described herein may provide a first device able to transmit and receive both optical communications signals and LIDAR signals using the same components. Such a device allows for both communications functionality (e.g., transmission and receipt of optical communications signals) as well as LIDAR functionality (e.g. transmission of LIDAR signals and receipt of reflected LIDAR signals) with lesser components, materials, and overall cost. In this regard, devices such as the first device require less materials to construct and are easier to maintain overall. The first device may also have additional benefits from simultaneous multi-node, multi-code and multi-wavelength capability. In addition, the OPA aperture can be dynamically reconfigured from a single to multiple sub-apertures each with tailorable and optimizable LIDAR and/or communications functionality. This may enable different information flows for communication channels, LIDAR functionality with different spatial frequencies, and/or different unambiguous range bins among multiple communication targets (e.g., remote device or client device) or LIDAR targets (e.g., objects in the FOV of the first device).

### EXAMPLE SYSTEMS

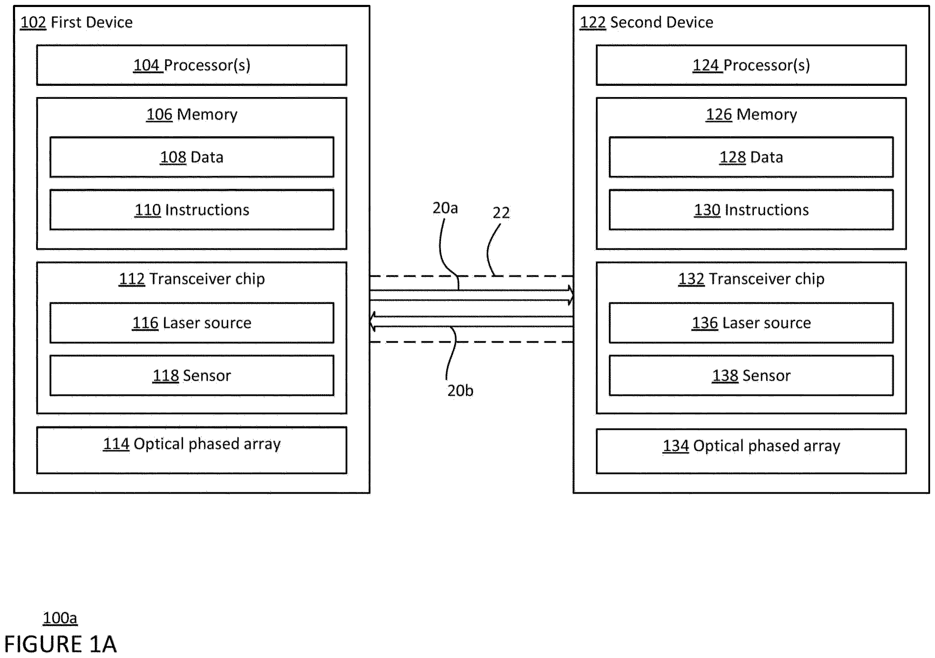

FIGURE 1A is a block diagram 100a of a first device 102 configured to form one or more links with a second device. The first and second devices may be part of a larger system. For instance, the system may include a plurality of autonomous vehicles configured to communicate with one another. In this regard, the first and/or second device may be an autonomous vehicle. In another instance, the system may be a free space optical communication (FSOC) system. In this instance, the first and second devices may additionally be configured to transmit one or more LIDAR signals directed at the environment surrounding the first device and receive reflections of such signals from surfaces in the environment.

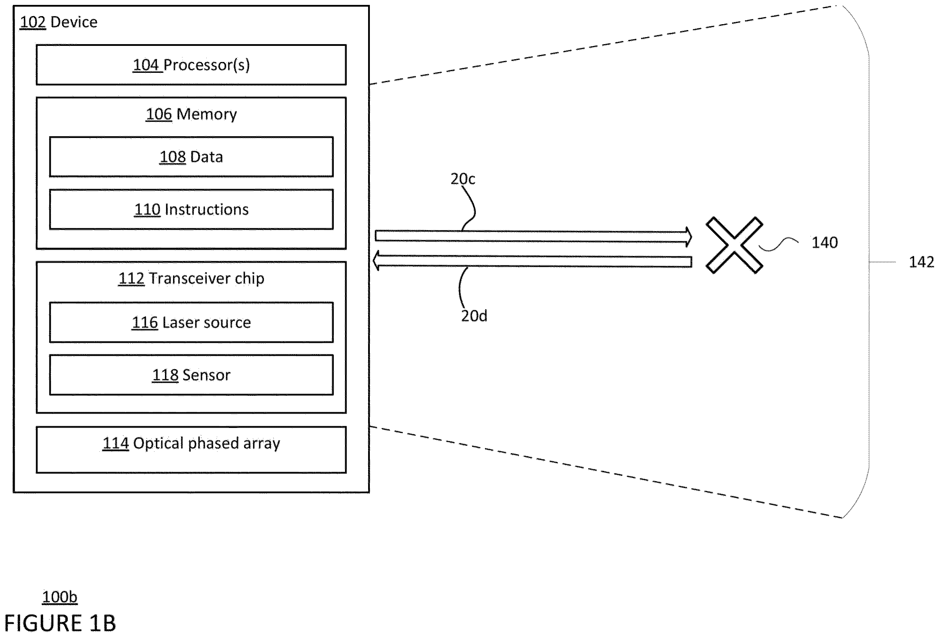

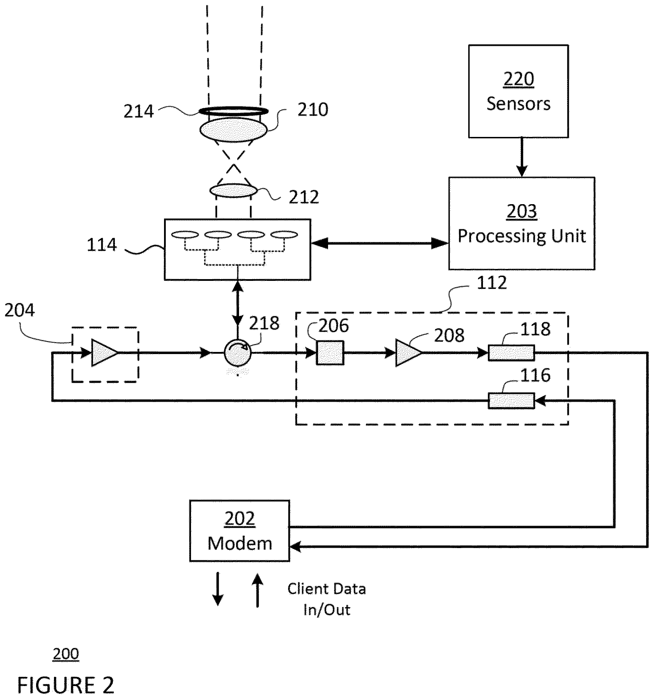

FIGURE 1B is a block diagram 100b of the first device 102, and FIGURE 2 is a pictorial diagram 200 of an example device, such as the first device 102 of FIGURES 1A-1B. For example, a first device 102 includes one or more processors 104, a memory 106, a transceiver photonic integrated chip 112, and an optical phased array (OPA) architecture 114. In this regard, the transceiver PIC 112 may be configured to transmit and receive signals via a bidirectional OPA. Alternatively, the transceiver chip 112 may be configured to transmit signals via a transmitter OPA and to receive signals via a receiver OPA. In such an instance, the transceiver chip 112 may include separate transmitter and receiver components or a first chip with transmitter components and a second chip with receiver components. In some implementations, the first device 102 may include more than one transceiver chip and/or more than one OPA architecture (e.g., more than one OPA chip).

The one or more processors 104 may be any conventional processors, such as commercially available CPUs. Alternatively, the one or more processors may be a dedicated device such as an application specific integrated circuit (ASIC) or another hardware-based processor, such as a field programmable gate array (FPGA). Although FIGURES 1A-1B functionally illustrates the one or more processors 104 and memory 106 as being within the same block, such as in a modem 202 for digital signal processing shown in FIGURE 2, the one or more processors 104 and memory 106 may actually comprise multiple processors and memories that may or may not be stored within the same physical housing, such as in both the modem 202 and a separate processing unit 203. Accordingly, references to a processor or computer will be understood to include references to a collection of processors or computers or memories that may or may not operate in parallel.

Memory 106 may store information accessible by the one or more processors 104, including data 108, and instructions 110, that may be executed by the one or more processors 104. The memory may be of any type capable of storing information accessible by the processor, including a computer-readable medium such as a hard-drive, memory card, ROM, RAM, DVD or other optical disks, as well as other write-capable and read-only memories. The system and method may include different combinations of the foregoing, whereby different portions of the data 108 and instructions 110 are stored on different types of media. In the memory of each device, such as memory 106, calibration information, such as one or more offsets determined for tracking a signal, may be stored.

Data 108 may be retrieved, stored or modified by one or more processors 104 in accordance with the instructions 110. For instance, although the system and method are not limited by any particular data structure, the data 108 may be stored in computer registers, in a relational database as a table having a plurality of different fields and records, XML documents or flat files. The data 108 may also be formatted in any computer-readable format such as, but not limited to, binary values or Unicode. By further way of example only, image data may be stored as bitmaps including grids of pixels that are stored in accordance with formats that are compressed or uncompressed, lossless (e.g., BMP) or lossy (e.g., JPEG), and bitmap or vector- based (e.g., SVG), as well as computer instructions for drawing graphics. The data 108 may comprise any information sufficient to identify the relevant information, such as numbers, descriptive text, proprietary codes, references to data stored in other areas of the same memory or different memories (including other network locations) or information that is used by a function to calculate the relevant data.

The instructions 110 may be any set of instructions to be executed directly (such as machine code) or indirectly (such as scripts) by the one or more processors 104. For example, the instructions 110 may be stored as computer code on the computer-readable medium. In that regard, the terms "instructions" and "programs" may be used interchangeably herein. The instructions 110 may be stored in object code format for direct processing by the one or more processors 104, or in any other computer language including scripts or collections of independent source code modules that are interpreted on demand or compiled in advance. Functions, methods and routines of the instructions 110 are explained in more detail below.

The one or more processors 104 may be in communication with the transceiver chip 112. As shown in FIGURE 2, the one or more processors in the modem 202 may be in communication with the transceiver chip 112, being configured to receive and process incoming optical signals and to transmit optical signals. The transceiver chip 112 may include one or more transmitter components and one or more receiver components. The one or more processors 104 may therefore be configured to transmit, via the transmitter components, data in a signal, and also may be configured to receive, via the receiver components, communications and/or data in a signal. The received signal may be processed by the one or more processors 104 to extract the communications and/or data.

The transmitter components, discussed in further detail below, may include at minimum a light source, such as laser source 116. Other transmitter components may include an amplifier, such as a high-power semiconductor optical amplifier 204. In some implementations, the amplifier is on a separate photonics chip. The light output of the laser source 116, or optical signal, may be controlled by a current, or electrical signal, applied directly to the laser source, such as from a modulator that modulates a received electrical signal. Light transmitted from the laser source 116 is received by the OPA architecture 114.

The receiver components, discussed in further detail below, may include at minimum a sensor 118, such as a photodiode. The sensor may convert a received signal (e.g., a LIDAR or optical communications signal), into an electrical signal that can be processed by the one or more processors. Other receiver components may include an attenuator, such as a variable optical attenuator 206, an amplifier, such as a semiconductor optical amplifier 208, or a filter. The one or more processors 104 may be in communication with the OPA architecture 114. The OPA architecture 114 may include a micro-lens array, an emitter associated with each micro-lens in the array, a plurality of phase shifters, and waveguides that connect the components in the OPA. The OPA architecture may be positioned on a single chip, an OPA chip. The waveguides progressively merge between a plurality of emitters and an edge coupler that connect to other transmitter and/or receiver components. In this regard, the waveguides may direct light between photodetectors or fiber outside of the OPA architecture, the phase shifters, the waveguide combiners, the emitters and any additional component within the OPA. In particular, the waveguide configuration may combine two waveguides at each stage, which means the number of waveguides is reduced by a factor of two at every successive stage closer to the edge coupler. The point of combination may be a node, and a combiner may be at each node. The combiner may be a 2x2 multimode interference (MMI) or directional coupler.

The OPA architecture 114 may receive light from the transmitter components and outputs the light as a coherent communications beam to be received by a remote device or client device, such as second device 122 of FIGURE 1A. The OPA architecture 114 may additionally output the light as a LIDAR signal. The OPA architecture 114 may also receive light from free space, such as a communications beam from second device 122 or a reflected LIDAR signal, and may provide such received light to the receiver components. The OPA architecture 114 may also provide the necessary photonic processing to combine an incoming signal into a single-mode waveguide that directs the signal towards the transceiver chip 112. In some implementations, the OPA architecture may also generate and provide an angle of arrival estimate to the one or more processors 104, such as those in processing unit 203.

The first device 102 may include additional components to support functions of the device. For example, the first device may include one or more lenses and/or mirrors that form a telescope. The telescope may receive collimated light and output collimated light. The telescope may include an objective portion, an eyepiece portion, and a relay portion. As shown in FIGURE 2, the first device may include a telescope including an objective lens 210, an eyepiece lens 212, and an aperture 214 (or opening) through which light may enter and exit the device. For ease of representation and understanding, the aperture 214 is depicted as distinct from the objective lens 210, though the objective lens 210 may be positioned within the aperture. The first device may include a circulator or wavelength splitter, such as a single mode circulator 218, that routes incoming and outgoing signals or light while keeping them on at least partially separate paths. The first optical communications terminal may include one or more sensors 220 for detecting measurements of environmental features and/or system components.

The first device 102 may include one or more steering mechanisms, such as one or more bias means for controlling one or more phase shifters, which may be part of the OPA architecture 114, and/or an actuated/steering mirror (not shown), such as a fast/fine pointing mirror. In some examples, the actuated mirror may be a MEMS 2-axis mirror, 2-axis voice coil mirror, or a piezoelectric 2-axis mirror. The one or more processors 104, such as those in the processing unit 203, may be configured to receive and process signals from the one or more sensors 220, the transceiver chip 112, and/or the OPA architecture 114 and to control the one or more steering mechanisms to adjust a pointing direction and/or wavefront shape. The first device terminal also includes optical fibers or waveguides connecting optical components, creating a path between the laser source 116 and OPA architecture 114 and a path between the OPA architecture 114 and the sensor 118.

Returning to FIGURE 1A, the second device 122 may output the Tx signals as an optical communications signal 20b (e.g., light) pointed towards the first device 102, which receives the optical communications signal 20b (e.g., light) as corresponding Rx signals. The second device 122 may be configured the same or similarly to the first device 102. For instance, the second device 122 may be configured to transmit and receive LIDAR signals directed at the environment surrounding the second device 122 in the same manner as device 102. In this regard, the second device 122 includes one or more processors, 124, a memory 126, a transceiver chip 132, and an OPA architecture 134. The one or more processors 124 may be similar to the one or more processors 104 described above.

In one example, illustrated in FIGURE 1 A, when transmitting optical communications signals between devices, a communication link 22 may be formed between the first device 102 and the second device 122 when the transceivers of the first and second devices are aligned. The alignment can be determined using the optical communications signals 20a, 20b to determine when line-of-sight is established between the devices 102, 122. Using the communication link 22, the one or more processors 104 can send communication signals using the optical communications signal 20a to the second device 122 through free space, and the one or more processors 124 can send communication signals using the optical communications signal 20b to the first device 102 through free space. The communication link 22 between the first and second devices 102, 122 allows for the bi-directional transmission of data between the two devices. In particular, the communication link 22 in these examples may be free-space optical communications (FSOC) links. In other implementations, one or more of the communication links 22 may be radio-frequency communication links or other type of communication link capable of traveling through free space.

Memory 126 may store information accessible by the one or more processors 124, including data 128 and instructions 130 that may be executed by processor 124. Memory 126, data 128, and instructions 130 may be configured similarly to memory 106, data 108, and instructions 110 described above. In addition, the transceiver chip 132 and the OPA architecture 134 of the second device 122 may be similar to the transceiver chip 112 and the OPA architecture 114. The transceiver chip 132 may include both transmitter components and receiver components. The transmitter components may include a light source, such as laser source 136 configured similar to the laser source 116. Other transmitter components may include an amplifier, such as a high-power semiconductor optical amplifier. The receiver components may include a sensor 138 configured similar to sensor 118. Other receiver components may include an attenuator, such as a variable optical attenuator, an amplifier, such as a semiconductor optical amplifier, or a filter. The OPA architecture 134 may include an OPA chip including a micro-lens array, a plurality of emitters, a plurality of phase shifters. Additional components for supporting functions of the second device 122 may be included similar to the additional components described above. The second device 122 may have a system architecture that is same or similar to the system architecture shown in FIGURE 2.

In some instances, illustrated in FIGURE 1B, the first device 102 is configured to transmit a LIDAR signal 20c into an environment thereof. The LIDAR signal 20c may span an entire field of view (FOV) 142 of the first device or a portion thereof. The LIDAR signal 20c signal may contact an object 140 or a plurality of objects in the environment. The contact may result in a reflected LIDAR signal 20d that may be received by the device 102.

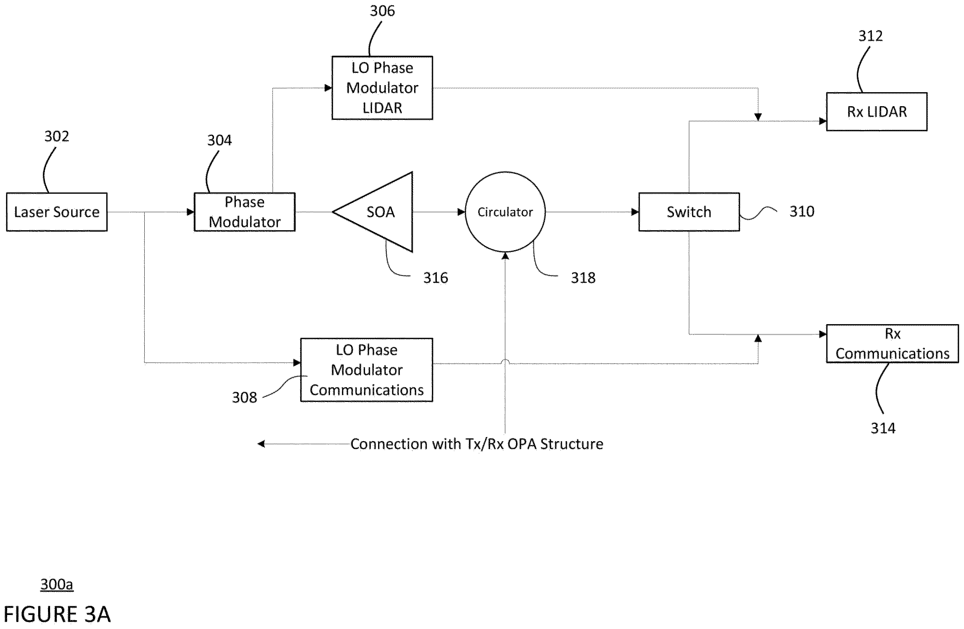

FIGURES 3A-3B illustrate example transceiver structures of the first device 102 or second device 122. The transceiver structures of the first device 102 may be configured to direct signals or light in a transmit direction and a receive direction. In the transmit direction, a generated signal or light to be transmitted may be directed to the OPA of the first device 102 for transmission. In the receive direction, a received signal or light may be received at the OPA of the first device 102 and may be directed to LIDAR receiver 312 or optical communications receiver 314, discussed further below. The generated signal may be an optical communications signal, such as optical communications signal 20a of FIGURE 1A or a LIDAR signal, such as LIDAR signal 20c of FIGURE 1B. Moreover, the received signal may be an optical communication signal received from a remote device or client device, such as optical communications signal 20b of FIGURE 1A or a reflected LIDAR signal, such as reflected LIDAR signal 20d of FIGURE 1B. Additionally, although the features described with respect to FIGURES 3A-3B are with reference to the first device 102, the second device 122 may also include and be capable of such features. For example, the second device 122 may include one or both of the transceiver structures of FIGURES 3A-3B and be figured to transmit and receive signals as discussed with respect to FIGURES 3A-3B.

The example transceiver structures may be configured to transmit and receive differing types of signals, for example, optical communications signals and LIDAR signals. In this regard, FIGURE 3A illustrates a transceiver structure 300a in which the transceiver is configured to transmit and receive signals via a bidirectional OPA. In this regard, the transceiver structure 300a includes a laser source 302, a phase modulator 304, a local oscillator (LO) phase modulator for LIDAR 306, a LO phase modulator for optical communications 308, a circulator 318, a transceiver switch 310, a LIDAR receiver 312, an optical communications receiver 314, and a semiconductor optical amplifier (SOA) 316. The components of the transceiver structure 300a may be connected by one or more waveguides (e.g., optical fibers).

In a transmit direction, the laser source 302 may generate a signal (e.g., light). The laser source 302 may be a distributed feedback laser (DFB), a laser diode, a fiber laser, a solid-state laser, an extended cavity diode laser (ECL), or a seed laser. The light output of the laser source 302, or signal, may be controlled by a current, or electrical signal, applied directly to the laser source 302, such as from a modulator that modulates a received electrical signal.

Further in the transmit direction, the generated signal may be directed from the laser source 302 to a phase modulator 304. The phase modulator 304 may be configured to encode the signal information (e.g., information for an optical communications signal, LIDAR waveform, etc.) onto the signal to be transmitted. In some instances, phase codes may additionally be encoded into the signals to be transmitted. The phase codes may allow for reduced interference between differing transceivers. In this regard, the encoded information determines the signal type to be transmitted.

For example, if the signal information is information for an optical communications signal, the generated signal is an optical communications signal. In this regard, an optical communications signal may be modulated via one or more modulation techniques such as phase-shift-keying (PSK) (e.g., Binary Phase-Shift Keying (BPSK), Quadrature Phase Shift Keying (QPSK), etc.). BPSK may modulate an optical communication signal using two phases 180 degrees apart (e.g., 0, π ). QPSK may use four phases 90 degrees apart (e.g., 0, π/2, π, 3π/2).

In another example, if the signal information is information for a LIDAR waveform, the generated signal is a LIDAR signal. In this regard, a LIDAR signal may be a square pulse format phase modulated waveform. The phase of the square pulse may be modulated by specific increments. In some instances, the specific increment may be π. In some instances, a pulse width of the LIDAR signal may be determined by an expected distance from the first device to an object. In some instances, the pulse width of the LIDAR signal may be varied over time. In this regard, the pulse width may be varied starting at a longer pulse width with subsequently a shorter pulse width. The longer pulse width may allow the first device to determine a relative location of an object within the FOV thereof. Subsequently, the shorter pulse width may allow for higher resolution of the object at the relative location. Additionally or alternatively, the first device may conduct a LIDAR scan across the FOV thereof at a first pulse width. The pulse width may be varied (e.g., from longer pulse widths to shorter pulse widths) at positions where an object is detected. In some instances, a repetition rate of the LIDAR signal may be dependent on one or more performance metrics of the first device such as an update rate or refresh rate, point to point scan time, number of points in a point cloud image to be generated, etc.

Further in the transmit direction, the generated signal may be directed from the phase modulator 304 to the SOA 316. The SOA 316 may be used by the phase modulator 304 to increase or boost a power level of a signal (e.g., amplify). This may, for example, extend range, data rate capabilities or area coverage rates of the generated signal. The SOA may be heterogeneously integrated onto the PIC or grown directly onto the PIC (e.g., silicon PIC) with a III-V pad and quantum dash structures which may minimize negative effects due to lattice mismatches and dislocations in the growth structure. In one example, when an optical communications signal is transmitted, the optical power can be amplified such that the power of the beam remains within eye-safe limits as well as controlled with a feedback loop to avoid saturation effects in the receiver OPA of a remote device. In some implementations, the SOA 316 may be a cascaded series of SOAs.

Further in the transmit direction, the generated signal may be directed from the SOA 316 to the circulator 318. The circulator 318 or wavelength splitter, such as a single mode circulator, may be configured to route incoming and outgoing signals (e.g., light) while keeping them on at least partially separate paths. In this regard, circulator 318 may isolate forward and backward propagating signals such that transmitted signals may be routed to the OPA for transmission and received signals may be routed to the receiver components for receipt. As such, in the transmit direction, the circulator 318 may connect to and route a signal from the transceiver structure 300a to the OPA of the first device 102 for transmission.

In a receive direction, a received signal may be routed from the OPA of the first device 102 to the circulator 318. As stated above, the circulator 318 may be configured to route incoming and outgoing signals (e.g., light) while keeping them on at least partially separate paths and may isolate forward and backward propagating signals such that transmitted signals may be routed to the OPA for transmission and received signals may be routed to the receiver components for receipt. As such, in the receive direction, the circulator 318 may route a signal to the transceiver switch 310.

The transceiver switch 310 may be configured to be in a first position and a second position. The first position may allow for a received signal that is a reflected LIDAR signal to be routed to and received by the LIDAR receiver 312. The second position may allow for a signal that is a received optical communications signal to be routed to and received by the optical communications receiver 314. The transceiver switch 310 may be changed from the first position to the second position by one or more processors of the first device 102 based on the type of signal received. For example, a reflected LIDAR signal may be in a first range of wavelengths and or phases, while a received optical communications signal may be in a second range of wavelengths and or phases. In this regard, when a received reflected LIDAR signal is in the first range, the one or more processors may change the transceiver switch 310 to the first position. Similarly, when a received optical communications signal is in the second range, the one or more processors may change the transceiver switch 310 to the second position.

Further in the receive direction, a reflected LIDAR signal received at the LIDAR receiver 312 from the transceiver switch 310 may be combined or mixed with a signal from the LO phase modulator for LIDAR 306. The LO phase modulator for LIDAR 306 may allow for coherent receiver functionality. Moreover, the LO phase modulator for LIDAR 306 may allow specific ranges of wavelengths and/or phases of photons to be received at the LIDAR receiver 312. In this regard, the LO phase modulator for LIDAR 306 may include a digital signal processor (DSP) to filter and/or compress received signals. In this regard, the LO phase modulator for LIDAR 306 may be configured to allow for phases of photons corresponding to LIDAR signals to be received at the LIDAR receiver 312. In this regard, the LO phase modulator for LIDAR 306 may modulate received or reflected LIDAR signals by mixing a received signal with light from the laser source 302. The light to be mixed with the reflected LIDAR signal may first be modulated by the phase modulator 304 to encode information (e.g., range and velocity information) prior to passing through the LO phase modulator for LIDAR 306. At the LIDAR receiver 312, signals from the LO phase modulator for LIDAR 306 may be amplified in a transimpedance amplifier (TIA) of the LIDAR receiver 312. The amplification may convert current to a voltage signal that is digitized by an Analog to Digital Converter (ADC) and further processed by the one or more processors 104 of the first device 102 (e.g., Field Programmable Gate Arrays (FPGA) and Central Processing Unit (CPU)).). In some instances, the FPGA may generate Point Cloud data (e.g., x spatial location, y spatial location, z range, v velocity vector) for each angular position. The Point Cloud data may be processed by the CPU.

Further in the receive direction, an optical communications signal received at the optical communications receiver 314 from the transceiver switch 310 may be combined or mixed with a signal from the LO phase modulator for optical communications 308. The LO phase modulator for optical communications 308 may be configured to allow phases of photons and/or wavelengths corresponding to optical communications signals to be received at the optical communications receiver 314. Signals from the LO phase modulator for optical communications 308 may be mixed with a received optical communications signal at the optical communications receiver 314. The received optical communications signal current may be amplified by a transimpedance amplifier (TIA) of the optical communications receiver 314. The amplification may convert current to a voltage signal that is digitized by an Analog to Digital Converter (ADC) and further processed by the one or more processors 104 of the first device 102 (e.g., FPGA and Central Processing Unit CPU). In some instances, the FPGA may, for example, apply Forward Error Corrections (FEC) algorithms that can reduce Bit Error Rates (BER).

The optical communications receiver 314 and the LIDAR receiver 312 may each include at minimum a sensor, such as a photodiode. The sensor may convert a received signal into an electrical signal that can be processed by the one or more processors as discussed above. Other receiver components may include an attenuator, such as a variable optical attenuator, an amplifier, such as a semiconductor optical amplifier or a TIA, a filter, and/or phase locking electronics as discussed above.

In some instances, the transceiver structure 300a may additionally include optical wavelength and phase locking electronics. The wavelength and phase locking electronics may be operatively coupled to the laser source 302, the LO phase modulator for LIDAR 306, the LO phase modulator for optical communications 308, the LIDAR receiver 312, and the optical communications receiver 314. When a LIDAR signal is received at the first device 102, the wavelength and phase locking electronics may lock the LO phase modulator for LIDAR 306 to one or more specific phases of photons of a signal to be received. In some instances, wavelength locking may not be required in the receipt of LIDAR signals since the transit and receive photons are from the same original source (e.g., the OPA of the first device 102).

When an optical communications signal is received at the first device 102, the wavelength and phase locking electronics may lock the LO phase modulator for optical communications 308 to one or more specific wavelengths and/or phases corresponding to optical communications signals to be received. In some instances, wavelength locking may be used in the receipt of optical communications signals since the received signals are from the different sources (e.g., the OPA of the second device 122). In some instances, the wavelength can be locked to a specific wavelength for coherent homodyne receiver applications or can be slightly offset for coherent heterodyne receiver applications.

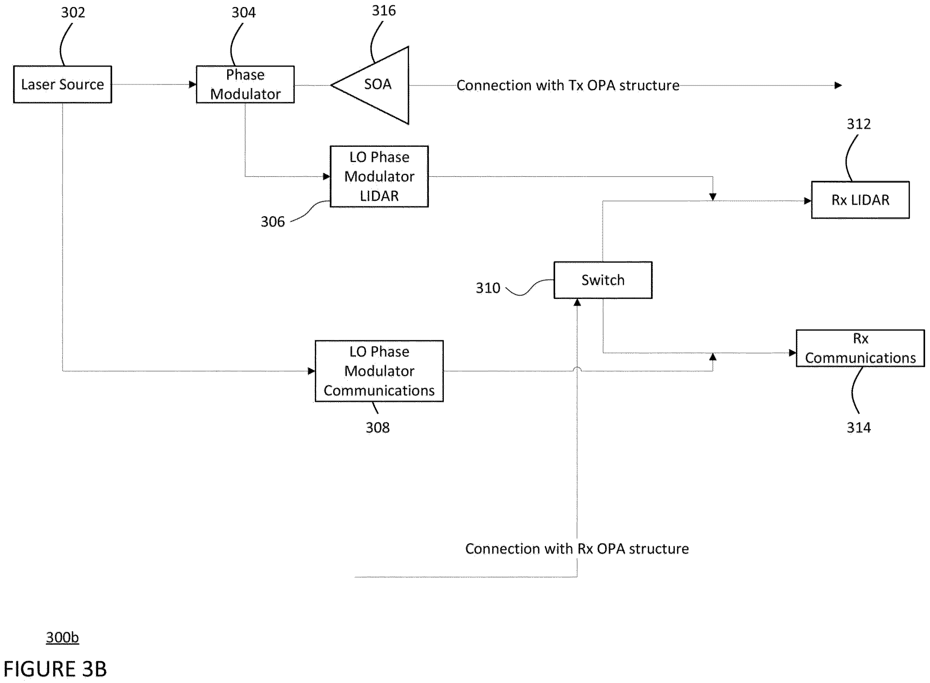

In another example, FIGURE 3B illustrates a transceiver structure 300b in which the transceiver may be configured to transmit signals via a transmitter OPA and receive signals via a receiver OPA. In such an example, the transceiver chip 112 may include separate transmitter and receiver components or a first chip with transmitter components and a second chip with receiver components. In this regard, the transceiver structure 300b may similarly include the laser source 302, the phase modulator 304, the local oscillator (LO) phase modulator for LIDAR 306, a LO phase modulator for optical communications 308, the transceiver switch 310, the LIDAR receiver 312, the optical communications receiver 314, and the SOA 316. In the transceiver structure 300b, the SOA 316 may be connected with the transmitter OPA and the transceiver switch 310 may be connected with the receiver OPA. The components of the transceiver structure 300b may be connected by one or more waveguides (e.g., optical fibers).

In a transmit direction, the laser source 302 may generate a signal (e.g., light). The laser source 302 may be a distributed feedback laser (DFB), a laser diode, a fiber laser, a solid-state laser, an extended cavity diode laser (ECL), or a seed laser. The light output of the laser source 302, or signal, may be controlled by a current, or electrical signal, applied directly to the laser source 302, such as from a modulator that modulates a received electrical signal.

Further in the transmit direction, the generated signal may be directed from the laser source 302 to a phase modulator 304. The phase modulator 304 may be configured to encode the signal information (e.g., information for an optical communications signal, LIDAR waveform, etc.) onto the signal to be transmitted as discussed above. In some instances, phase codes may additionally be encoded into the signals to be transmitted. The phase codes may allow for reduced interference between differing transceivers.

Further in the transmit direction, the generated signal may be directed from the phase modulator 304 to the SOA 316. The SOA 316 may be used by the phase modulator 304 to increase or boost a power level of a signal (e.g., amplify). This may, for example, extend range, data rate capabilities or area coverage rates of the signal. The SOA may be heterogeneously integrated onto the PIC or grown directly onto the PIC (e.g., silicon PIC) with a III-V pad and quantum dash structures which may minimize negative effects due to lattice mismatches and dislocations in the growth structure. In one example, when an optical communications signal is transmitted, the optical power can be amplified such that the power of the beam remains within eye-safe limits as well as controlled with a feedback loop to avoid saturation effects in the receiver OPA of a remote device. In some implementations, the SOA 316 may be a cascaded series of SOAs. The SOA 316 may connect to and route a signal from the transceiver structure 300b to the OPA of the first device 102 for transmission.

In a receive direction), a signal may be routed from the OPA of the first device 102 to transceiver switch 310. The transceiver switch 310 may be configured in the manner as discussed above.

Further in a receive direction, a reflected LIDAR signal received at the LIDAR receiver 312 from the transceiver switch 310 may be combined or mixed with a signal from the LO phase modulator for LIDAR 306. As discussed above, the LO phase modulator for LIDAR 306 may allow for coherent receiver functionality. Moreover, the LO phase modulator for LIDAR 306 may allow specific ranges of wavelengths and/or phases of photons to be received at the LIDAR receiver 312. In this regard, the LO phase modulator for LIDAR 306 may include a digital signal processor (DSP) to filter and/or compress received signals. In this regard, the LO phase modulator for LIDAR 306 may be configured to allow for phases of photons corresponding to LIDAR signals to be received at the LIDAR receiver 312. In this regard, the LO phase modulator for LIDAR 306 may modulate received or reflected LIDAR signals by mixing a received signal with light from the laser source 302. The light to be mixed with the reflected LIDAR signal may first be modulated by the phase modulator 304 to encode information (e.g., range and velocity information) prior to passing through the LO phase modulator for LIDAR 306. At the LIDAR receiver 312, signals from the LO phase modulator for LIDAR 306 may be amplified in a transimpedance amplifier (TIA) of the LIDAR receiver 312. The amplification may convert current to a voltage signal that is digitized by an Analog to Digital Converter (ADC) and further processed by the one or more processors 104 of the first device 102 (e.g., Field Programmable Gate Arrays (FPGA) and Central Processing Unit (CPU)).). In some instances, the FPGA may generate Point Cloud data (e.g., x spatial location, y spatial location, z range, v velocity vector) for each angular position. The Point Cloud data may be processed by the CPU.

Further in a receive direction, an optical communications signal received at the optical communications receiver 314 from the transceiver switch 310 may be combined or mixed with a signal from the LO phase modulator for optical communications 308. As discussed above, the LO phase modulator for optical communications 308 may be configured to allow phases of photons and/or wavelengths corresponding to optical communications signals to be received at the optical communications receiver 314. Signals from the LO phase modulator for optical communications 308 may be mixed with a received optical communications signal at the optical communications receiver 314. The received optical communications signal current may be amplified by a transimpedance amplifier (TIA) of the optical communications receiver 314. The amplification may convert current to a voltage signal that is digitized by an Analog to Digital Converter (ADC) and further processed by the one or more processors 104 of the first device 102 (e.g., FPGA and Central Processing Unit CPU). In some instances, the FPGA may, for example, apply Forward Error Corrections (FEC) algorithms that can reduce Bit Error Rates (BER).

As discussed above, the optical communications receiver 314 and the LIDAR receiver 312 may include at minimum a sensor, such as a photodiode. The sensor may convert a received signal into an electrical signal that can be processed by the one or more processors as discussed above. Other receiver components may include an attenuator, such as a variable optical attenuator, an amplifier, such as a semiconductor optical amplifier or a TIA, a filter, and/or phase locking electronics as discussed above.

In some instances, the transceiver structure 300b may additionally include optical wavelength and phase locking electronics. The wavelength and phase locking electronics may be operatively coupled to the laser source 302, the LO phase modulator for LIDAR 306, the LO phase modulator for optical communications 308, the LIDAR receiver 312, and the optical communications receiver 314. The wavelength and phase locking electronics may be configured in the same manner as discussed above.

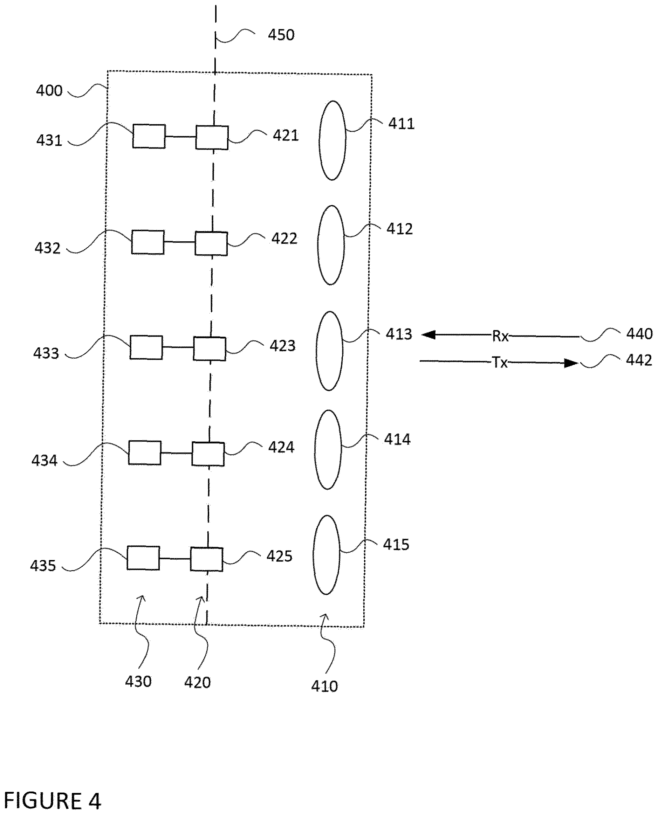

FIGURE 4 represents features of OPA architecture 114 represented as an example OPA chip 400 including representations of a micro-lens array 410, a plurality of emitters 420, and a plurality of phase shifters 430. For clarity and ease of understanding, additional waveguides and other features are not depicted. Arrows 440, 442 represent the general direction of Tx signals (e.g., transmitted optical communications signal, LIDAR, etc.) and Rx signals (e.g., received optical communications signal, reflected LIDAR, etc.) as such signals pass or travel through the OPA chip 400.

The micro-lens array 410 may include a plurality of convex micro-lenses 411-415 that focus the Rx signals onto respective ones of the plurality emitters positioned at the focal points of the micro-lens array. In this regard, the dashed-line 450 represents the focal plane of the micro-lenses 411-415 of the micro-lens array 410. The micro-lens array 410 may be arranged in a grid pattern with a consistent pitch, or distance, between adjacent lenses. In other examples, the micro-lens array 410 may be in different arrangements having different numbers of rows and columns, different shapes, and/or different pitch (consistent or inconsistent) for different lenses.

Each micro-lens of the micro-lens array may be 10's to 1000's of micrometers in diameter and height. In addition, each micro-lens of the micro-lens array may be manufactured by molding, printing, or etching a lens directly into a wafer of the OPA chip 400. Alternatively, the micro-lens array 410 may be molded, printed, or etched as a separately fabricated micro- lens array. In this example, the micro-lens array 410 may be a rectangular or square plate of glass or silica a few mm (e.g., 10 mm or more or less) in length and width and 0.2 mm or more or less thick. Integrating the micro-lens array within the OPA chip 400 may allow for the reduction of the grating emitter size and an increase in the space between emitters. In this way, two-dimensional waveguide routing in the OPA architecture may better fit in a single layer optical phased array. In other instances, rather than a physical micro-lens array, the function of the micro-lens array may be replicated using an array of diffractive optical elements (DOE).

Each micro-lens of the micro-lens array may be associated with a respective emitter of the plurality of emitters 420. For example, each micro-lens may have an emitter from which Tx signals are received and to which the Rx signals are focused. As an example, micro-lens 411 is associated with emitter 421. Similarly, each micro-lens 412-415 also has a respective emitter 422-425. In this regard, for a given pitch (i.e., edge length of a micro-lens) the micro-lens focal length may be optimized for best transmit and receive coupling to the underlying emitters. This arrangement may thus increase the effective fill factor of the Rx signals at the respective emitter, while also expanding the Tx signals received at the micro-lenses from the respective emitter before the Tx signals leave the OPA chip 400.

The plurality of emitters 420 may be configured to convert emissions from waveguides to free space and vice versa. The emitters may also generate a specific phase and intensity profile to further increase the effective fill factor of the Rx signals and improve the wavefront of the Tx signals. The phase and intensity profile may be determined using inverse design or other techniques in a manner that accounts for how transmitted signals will change as they propagate to and through the micro-lens array. The phase profile may be different from the flat profile of traditional grating emitters, and the intensity profile may be different from the gaussian intensity profile of traditional grating emitters. However, in some implementations, the emitters may be Gaussian field profile grating emitters.

The phase shifters 430 may allow for sensing and measuring Rx signals and the altering of Tx signals to improve signal strength optimally combining an input wavefront into a single waveguide or fiber. Each emitter may be associated with a phase shifter. As shown in FIGURE 4, each emitter may be connected to a respective phase shifter. As an example, the emitter 420 is associated with a phase shifter 430. The Rx signals received at the phase shifters 431-435 may be provided to receiver components including the sensor 118, and the Tx signals from the phase shifters 431-435 may be provided to the respective emitters of the plurality of emitter 420. The architecture for the plurality of phase shifters 430 may include at least one layer of phase shifters having at least one phase shifter connected to an emitter of the plurality of emitters 420. In some examples, the phase shifter architecture may include a plurality of layers of phase shifters, where phase shifters in a first layer may be connected in series with one or more phase shifters in a second layer.

As noted above, the OPA architecture 114 of the first device 102 may be a segmented OPA architecture containing a plurality of segments. Each of these segments may include a PIC with a plurality of features including a micro-lens array, an emitter associated with each micro-lens, a set of phase shifters for each micro-lens, an emitter for each micro-lens, waveguides that connect the components in the OPA architecture, and one or more combiners that may combine connected waveguides. Alternatively, the plurality of segments may be included on a single PIC with the plurality of features. A plurality of splitters, phase shifters, and switches may be used to control whether the plurality of segments function independently or in conjunction with one another.

In one example, the plurality of segments may include 2, 4 or more or less segments. Each segment may be configured to send and receive signals independently and with all of the other segments at different times. For instance, the first device 102 may communicate with two or more remote devices or client devices. In this scenario, one segment of the plurality of segments may be configured to transmit and receive optical communications signals for one of the two remote devices while another the plurality of segments of the segmented OPA architecture may be configured to transmit and receive optical communications signals with the other of the two remote devices. Using the plurality of switches and splitters, the segments may also be configured to send and receive communications to the same remote communications terminal at once.

In another scenario, the first device 102 may be configured to transmit LIDAR signals and receive reflected LIDAR signals to two or more differing areas (e.g., areas of interest) of the environment of the first device 102. The areas may be a portion of the FOV 142 or the entirety of FOV 142. The areas may overlap partially, fully, or not at all. In this scenario, one segment of the plurality of segments may be configured to transmit LIDAR signals and receive reflected LIDAR signals for one of the two areas while another the plurality of segments of the segmented OPA architecture may be configured to transmit LIDAR signals and receive reflected LIDAR signals with the other of the two areas. Using the plurality of switches and splitters, the segments may also be configured to send LIDAR signals and receive reflected LIDAR signals to the same area at once.

In yet another scenario, the first device 102 may be configured to transmit LIDAR signals, receive reflected LIDAR signals, transmit optical communications signals, and receive optical communications signals. In this scenario, one segment of the plurality of segments may be configured to transmit LIDAR signals and receive reflected LIDAR signals for an area while another the plurality of segments of the segmented OPA architecture may be configured to transmit and receive optical communications signals with a remote device.

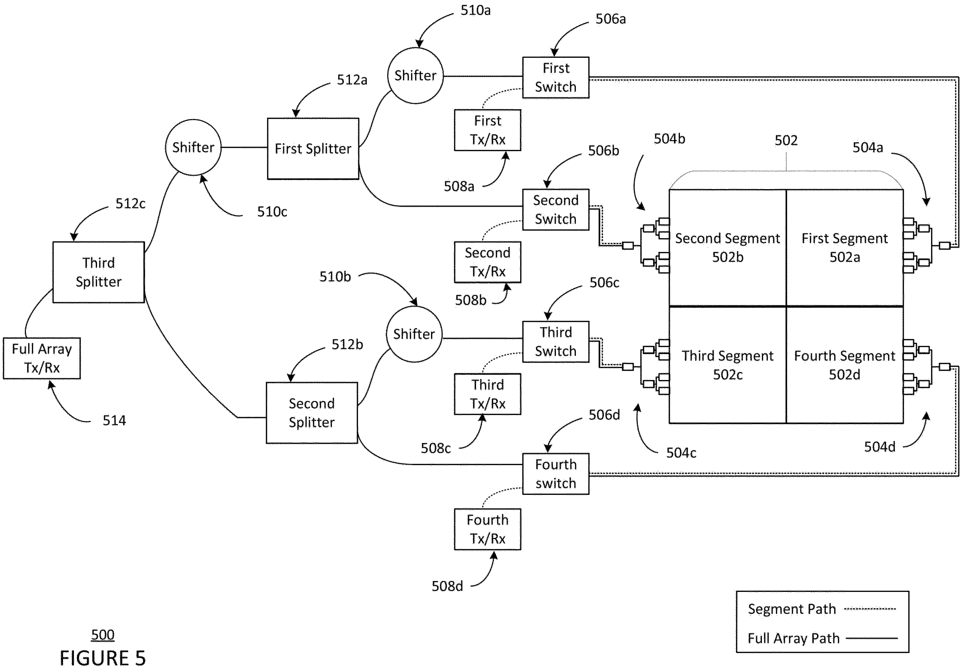

FIGURE 5 illustrates an example system architecture 500 for the first device 102 where the OPA architecture is implemented as a PIC with a segmented OPA architecture. The example system architecture 500 includes a segmented OPA architecture 502 with a plurality of segments, here four segments (i.e., a first segment 502a, second segment 502b, third segment 502c, and fourth segment 502d). Each of the segments 502a, 502b, 502c, 502d, may include a waveguide configuration 504a, 504b, 504c, 504d which may include one or more combiners and an edge coupler. In particular, the waveguide configuration 504a, 504b, 504c, 504d may combine two waveguides at each stage, which means the number of waveguides is reduced by a factor of two at every successive stage closer to the edge coupler. The point of combination may be a node, and a combiner may be at each node. The combiner may be a 2x2 multimode interference (MMI) or directional coupler. Each of the plurality of segments 502a, 502b, 502c, 502d includes a respective plurality of phase shifters. Each of the plurality of segments 502a, 502b, 502c, 502d is connected via optical fibers or waveguides to a switch. In this regard, the segmented OPA includes a switch for each segment of the plurality of segments, here four switches (i.e., a first switch 506a, second switch 506b, third switch 506c, and fourth switch 506d).

The plurality of switches 506a, 506b, 506c, 506d may be configured to be in a first or second position. The first position may allow for Tx/Rx joint functionality with other segments of the segmented OPA architecture, whereas the second position may allow for Tx/Rx functionality independent of other segments of the segmented OPA architecture.

The first device 102 may contain a plurality of transceivers as discussed above. One of the plurality of transceivers may be a full array transceiver 514 configured to allow for Tx/Rx functionality with all segments of the plurality of segments, whereas the remaining transceivers may be a plurality of segment transceivers configured to allow for Tx/Rx functionality with a single segment of the plurality of segments. FIGURE 5 illustrates a first segment transceiver 508a corresponding to the first segment 502a, a second segment transceiver 508b corresponding to the second segment 502b, a third transceiver 508c corresponding to the third segment 502c, and a fourth segment transceiver 508d corresponding to the fourth segment 502d. The plurality of segment transceivers 508a, 508b, 508c, 508d may each be connected to one of the plurality of switches 506a, 506b, 506c, 506d via waveguides or optical fibers. In this regard, the plurality of segment transceivers 508a, 508b, 508c, 508d may transmit and receive signals from corresponding segments of the plurality of segments when the corresponding switch is in the second position. The plurality of segment transceivers 508a-d may be configured the same or similarly as one or more of the transceiver structures 300a-b discussed with respect to FIGURES 3A-B.

Moreover, the full array transceiver 514 may be used to transmit and receive signals from the plurality of segments when the plurality of switches are all in the first position. The full array transceiver 514 may be configured the same or similarly as transceiver structures 300a-b discussed with respect to FIGURES 3A-B. A plurality of full array paths may be defined as extending from the full array transceiver to each of the plurality of segments. A plurality of segment paths may be defined as extending from each of the plurality of segment transceivers, to each of the corresponding segments. In some instances, the transceivers discussed herein may be transmitters or receivers. In this regard, segmented OPA may be a transmit segmented OPA or a receiver segmented OPA.

The segmented OPA architecture may contain one or more additional phase shifters 510a, 510b, 510c and one or more splitters (e.g., 1x2 splitter) 512a, 512b, 512c in full array paths from a respective one of the array of phase shifters to the full array transceiver 514. In some implementations and as illustrated in FIGURE 5, each of the one or more additional phase shifters 510a, 510b, 510c may be disposed in a respective full array path between the plurality of switches 506a, 506b, 506c, 506d and the full array transceiver 514. Additionally or alternatively, the additional phase shifters 510a, 510b, 510c may be disposed in a respective full array path or segment path between each of the respective array of phase shifters and a corresponding switch of the plurality of switches. As shown in FIGURE 5, the segmented OPA architecture contains three additional phase shifters (i.e., a first additional phase shifter 510a , second additional phase shifter 510b, and third additional phase shifter 510c.)

For instance, as shown in FIGURE 5, the segmented OPA architecture may include one or more splitters. The one or more splitters enable division (e.g., splitting) and combination of power along a plurality of different full array paths. The full array paths may extend from the segments to the full array transceiver 514. In FIGURE 5, the example segmented OPA architecture includes three splitters disposed in the four full array paths from four segments to a full array transceiver. For instance, a first splitter 512a is disposed in a first full array path and the second full array path. The first full array path extending from the first segment 502a to the full array transceiver 514 and the second full array path extending from the second segment 502b to the full array transceiver 514.

In a receive direction (e.g., a signal or light may be directed from one or more of the segments to a transceiver of the first device 102), the first splitter 512a may combine the first full array path and second full array path and in the transmit direction (e.g., a signal or light may be directed to one or more of the segments to a transceiver of the first device 102), the first splitter 512a may divide the first full array path and second full array path. In this regard, the first splitter 512a connects with an optical fiber or waveguide of the first full array path and an optical fiber or waveguide of the second full array path on the segment side and connects with a joint first and second full array path optical fiber or waveguide on the full array transceiver side.

The first splitter 512a may combine and divide power along the first full array path and the second full array path when the first segment 502a and second segment 502b function jointly. For example, if the first segment 502a and the second segment 502b function jointly (e.g., may be driven together to transmit and receive signals) the first splitter 512a may combine power when a signal is received and may divide power equally when a signal is transmitted. If the first segment 502a and second segment 502b do not function jointly, the first splitter 512a may not divide or combine power along the first full array path and the second full array path.

FIGURE 5 further illustrates a second splitter 512b is disposed in a third full array path and a fourth full array path. The third full array path extending from a third segment 502c to the full array transceiver 514 and the fourth full array path extending from a fourth segment 502d to the full array transceiver 514.

In the receive direction, the second splitter 512b may combine the third full array path and fourth full array path and in the transmit direction, the second splitter 512b may divide the third full array path and fourth full array path. In this regard, the second splitter 512b connects with an optical fiber or waveguide of the third full array path and an optical fiber or waveguide of the fourth full array path on the segment side and connects with a joint third and fourth full array path optical fiber or waveguide on the full array transceiver side. Similar to the first splitter 512a, the second splitter 512b may combine and divide power along different full array paths when the third segment 502c and fourth segment 502d function jointly.

FIGURE 5 further illustrates a third splitter 512c disposed in the first full array path, second full array path, third full array path, and fourth full array path. In a receive direction, the third splitter 512c may combine the joint first and second full array path and the joint the third full array path and fourth full array path and in the transmit direction, the third splitter 512c may divide the joint first full array path, second full array path, third full array path, and fourth full array path into the joint first and second full array path and the joint the third full array path and fourth full array path. In this regard, the third splitter 512c connects with the joint first and second full array path optical fiber or waveguide and the joint third and fourth full array path optical fiber or waveguide the joint first and second full array path on the segment side and connects with a joint first, second, third, and fourth full array path optical fiber or waveguide on the full array transceiver side. The third splitter 512c may combine and divide power along different full array paths when the first segment 502a, second segment 502b, the third segment 502c, and the fourth segment 502d function jointly.

In this regard, the undivided and uncombined power may be directed along the full array path of the one or more segments transmitting or receiving signals via the full array transceiver 514 (e.g., towards the first splitter or towards the second splitter).

### EXAMPLE METHODS

As discussed above, in one implementation, the first device 102 may be a first autonomous vehicle. In such an implementation, the OPA architecture 114 of the first autonomous vehicle may be configured to transmit and receive LIDAR signals to detect objects in an environment surrounding the first autonomous vehicle. Additionally, the OPA architecture of the first autonomous vehicle may be configured to transmit and receive optical communications signals to one or more remote autonomous vehicles (e.g., corresponding to the second device 122) in the environment surrounding the first autonomous vehicle.

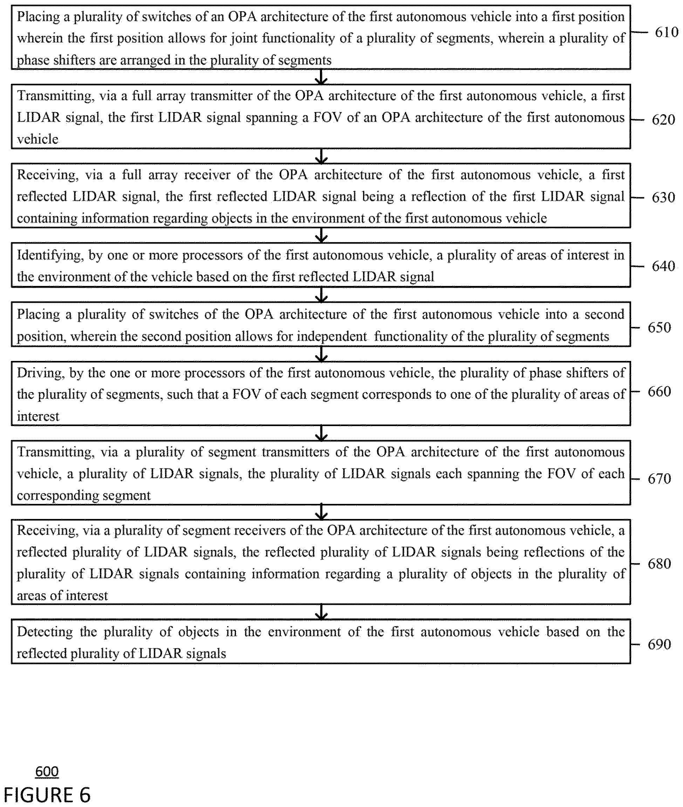

In one scenario, the OPA architecture may be used in a method of detecting a plurality of objects in an environment of a first autonomous vehicle. In this regard, FIGURE 6 illustrates and example method 600 of detecting a plurality of objects in an environment of a first autonomous vehicle. At block 610, the method includes placing a plurality of switches of an OPA architecture of the first autonomous vehicle into a first position wherein the first position allows for joint functionality of a plurality of segments, wherein a plurality of phase shifters are arranged in the plurality of segments. In this regard, one or more processors 102 of the first autonomous vehicle or first device 102 may place the plurality of switches 506a-d of the OPA architecture 114 in the first position. When the plurality of switches 506a-d are in a first position, the plurality of segments 506a-d may function in conjunction or jointly (i.e., be driven together to transmit and receive signals).

At block 620, the method further includes transmitting, via a full array transmitter of the OPA architecture of the first autonomous vehicle, a first LIDAR signal, the first LIDAR signal spanning a FOV of an OPA architecture of the first autonomous vehicle. In this regard, the one or more processors 104 of the first autonomous vehicle or first device 102 may transmit a first LIDAR signal (e.g., LIDAR signal 20c) via the full array transmitter 514. The signal may cover an entire FOV 142 of the OPA architecture 114. In some instances, the first LIDAR signal may be modulated such that it has a unique wavelength. In this regard, interference between the first LIDAR signal and differing LIDAR signals may be reduced.

At block 630, the method further includes receiving, via a full array receiver of the OPA architecture of the first autonomous vehicle, a first reflected LIDAR signal, the first reflected LIDAR signal being a reflection of the first LIDAR signal containing information regarding objects in the environment of the first autonomous vehicle. In this regard, the one or more processors 104 of the first autonomous vehicle or first device 102 may receive the first reflected LIDAR signal (e.g., LIDAR signal 20d) via the full array transmitter 514. The first reflected LIDAR signal may be a reflection of the first transmitted LIDAR signal 20c. As such, the first LIDAR signal may have reflected off of a plurality of objects (e.g., object 140). in the environment of the first autonomous vehicle. The plurality of objects may be items or features of the environment such as remote autonomous vehicles, traffic lights, vegetation, signs, pedestrians, road obstacles, etc. The first reflected LIDAR signal, reflected off of one or more of the plurality of objects, may contain information regarding the objects such as distance, location, etc. Additionally, upon receipt of the reflected LIDAR signal, a transceiver switch 310 of the full array transmitter 514 may be placed in the first position (e.g., by one or more processors 104). The first position may allow for a signal to be received by the LIDAR receiver 312.

At block 640, the method further includes identifying, by one or more processors of the first autonomous vehicle, a plurality of areas of interest in the environment of the vehicle based on the first reflected LIDAR signal. In this regard, the one or more processors 104 of the first autonomous vehicle or first device 102 may identify areas of interest based on the first reflected LIDAR signal. The first reflected LIDAR signal may include information regarding objects (e.g., object 140) in the environment of the first autonomous vehicle such as distance, location, etc. In this regard, the plurality of areas of interest may be identified based on the object information. For example, each of the plurality of areas of interest may correspond to areas of the FOV where the reflected first LIDAR signal indicates an object may be present.

At block 650, the method further includes placing a plurality of switches of the OPA architecture of the first autonomous vehicle into a second position, wherein the second position allows for independent functionality of the plurality of segments. In such an instance, the one or more processors 104 of the first autonomous vehicle or first device 102 may place the plurality of switches 506a-d in the second position upon identifying the plurality of areas of interest. In the second position, the plurality of segments 502a-d may function independently (i.e., be driven separately to transmit and receive signals).

At block 660, the method further includes driving, by the one or more processors of the first autonomous vehicle, the plurality of phase shifters of the plurality of segments, such that a FOV of each segment corresponds to one of the plurality of areas of interest. In this regard, each segment 502a-d of the OPA architecture 114, 400, 502 may be separately driven to a differing FOV. Each differing FOV may be a portion of the FOV 142 of the first autonomous vehicle or first device 102. Each segment 502a-d may be driven to achieve a desired pointing direction for the transmission of signals. In this regard, the one or more processors 104 may calculate a phase shift for each segment 502a-d of the OPA architecture 114, 400, 502 to achieve a desired pointing direction for the signals. For instance, the one or more processors 104 may determine a shift for each phase shifter in each of the segments of the OPA architecture based on the desired pointing direction. The desired pointing direction of each segment may correspond to differing FOVs. The differing FOVs may correspond to one of the plurality of areas of interest. The differing FOVs may or may not overlap partially, fully, or not at all.

At block 670, the method further includes transmitting, via a plurality of segment transmitters of the OPA architecture of the first autonomous vehicle, a plurality of LIDAR signals, the plurality of LIDAR signals each spanning the FOV of each corresponding segment. The one or more processors 104 may transmit the plurality of LIDAR signals via a corresponding one of the plurality of segment transmitters 508a-d. Each of the plurality of LIDAR signals may be transmitted to a differing FOV. The differing FOVs of each segment may correspond to one of the plurality of areas of interest discussed above. In some implementations, the plurality of LIDAR signals may be transmitted by each segment at differing times or simultaneously. In some instances, the plurality of LIDAR signals may be modulated such that each has a unique wavelength. In this regard, interference between the plurality of LIDAR signals themselves in addition to differing LIDAR signals may be reduced.

At block 680, the method further includes receiving, via a plurality of segment receivers of the OPA architecture of the first autonomous vehicle, a reflected plurality of LIDAR signals, the reflected plurality of LIDAR signals being reflections of the plurality of LIDAR signals containing information regarding a plurality of objects in the plurality of areas of interest. In this regard, the one or more processors 104 of the first autonomous vehicle or first device 102 may receive the reflected plurality of LIDAR signals via the plurality of segment receivers 508a-d. The reflected plurality of LIDAR signals may be a reflection of the plurality of transmitted LIDAR signals. As such, the plurality of LIDAR signals may have reflected off of a plurality of objects in the identified areas of interest. The reflected plurality of LIDAR signals, reflected off of one or more of the plurality of objects, may contain information regarding the objects such as distance, location, etc. The reflected plurality of LIDAR signals may contain additional information (e.g., more data points, higher resolution, etc.) regarding the plurality of objects with respect to the first reflected LIDAR signal. Additionally, upon receipt of the reflected LIDAR signal, a transceiver switch 310 of the full array transmitter 514 may be placed in the first position (e.g., by one or more processors 104). The first position may allow for a signal to be received by the LIDAR receiver 312.

At block 690, the method further includes detecting the plurality of objects in the environment of the first autonomous vehicle based on the reflected plurality of LIDAR signals. In this regard, the one or more processors 104 of the first autonomous vehicle or device 102 may utilize the information contained in the plurality of reflected LIDAR signals to detect the plurality of objects. The detection of the plurality of objects may include identifying the objects. For example, the detection may include identifying one of the objects as a remote autonomous vehicle in the environment of the first autonomous vehicle. The plurality of objects may be items or features of the environment such as remote autonomous vehicles, traffic lights, vegetation, signs, pedestrians, road obstacles, etc.

As discussed above, in some implementations, the full array transmitter and full array receiver may alternatively be a single component, a full array transceiver, configured to both transmit and receive and receive signals. Similarly, in some implementations, each pair of the segment transmitters and segment receivers may alternatively be a signal component, a segment transceiver, configured to both transmit and receive signals from a corresponding segment.

In some implementations, transmitting, via the full array transmitter of the OPA architecture of the first autonomous vehicle, the first LIDAR signal, may include transmitting a first plurality of LIDAR signals. Similarly, receiving, via the full array receiver of the OPA architecture of the first autonomous vehicle, the first reflected LIDAR signals may include receiving a first reflected plurality of LIDAR signals. In this regard, each of the first plurality of LIDAR signals may be dithered according to an orthogonal set of functions. The dithering may be time-division dithering, frequency division dithering, or a combination thereof (e.g., hybrid dithering). Dithers may be applied to differing subsets of phase shifters of the plurality of phase shifters. Each subset of phase shifters may correspond to a function of the orthonormal set of functions. In some implementations, the orthonormal set of functions may be Walsh functions.

For time-division dithering, each of the first plurality of LIDAR signals may be transmitted sequentially. In this regard, a dither may be applied to a different subset of phase shifters for each sequential signal. The dither frequency for each dither may be selected from a predetermined set of frequencies. The frequency of each dither may or may not be the same.

For frequency-division dithering, each of the first plurality of LIDAR signals may be transmitted simultaneously. In this regard, a dither may be applied to a different subset of phase shifters for each signal. The dither frequency for each signal may be selected from a predetermined set of frequencies. In some instances, each of the frequencies of the predetermined set of frequencies may be unique. In such instances, the frequencies of the predetermined set of frequencies may be selected such that they do not interfere with one another. Additionally or alternatively, in some instances, each of the plurality of predetermined frequencies may not be unique. In such instances, the perturbation of the plurality of perturbations utilizing the same frequencies, or frequencies that may interfere, may be selected such that they will not interfere. For example, if two perturbations utilize the same frequency, one perturbation may be utilized via a sine function and the other may be utilized a cosine function where one of the functions may be shifted by n/2 such that the perturbations are orthogonal and/or out of phase.

Additionally or alternatively, in some implementations, transmitting, via a plurality of segment transmitters of the OPA architecture of the first autonomous vehicle, a plurality of LIDAR signals, the plurality of LIDAR signals each spanning the FOV of each corresponding segment may include transmitting a plurality of LIDAR signals from each segment. In this regard, each of the plurality of LIDAR signals transmitted from each may be dithered according to an orthogonal set of functions as discussed above.

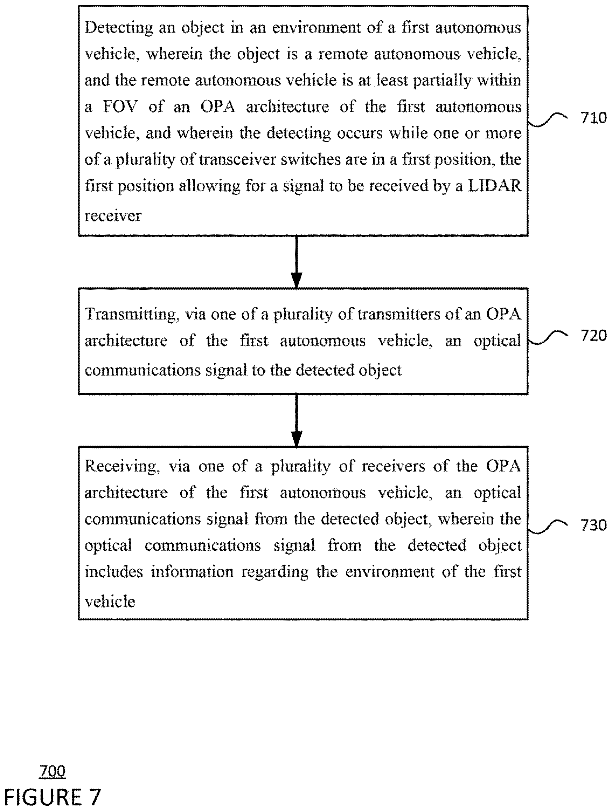

In another scenario, the OPA architecture may be used in a method of receiving information regarding an environment of a first vehicle. In some instances, the information may pertain to an area of the environment occluded by an object. In this regard, FIGURE 7 illustrates an example method 700 of receiving information regarding an environment of a first vehicle. At block 710, an object is detected in an environment of a first autonomous vehicle, wherein the object is a remote autonomous vehicle, and the remote autonomous vehicle is at least partially within a FOV of an OPA architecture of the first autonomous vehicle, and wherein the detecting occurs while one or more of a plurality of transceiver switches are in a first position, the first position allowing for a signal to be received by a LIDAR receiver. In this regard, the first autonomous vehicle or first device 102 may detect an object in its environment. The detection may occur using the method described above with respect to FIGURE 6. The detection may occur when the one or more of the plurality of transceiver switches 310 are in a first position. The first position may allow for a signal to be received by the LIDAR receiver 312. The detected object may be a remote autonomous vehicle at least partially within the FOV 142 of the OPA architecture 114 of the first autonomous vehicle. In some instances, the remote autonomous vehicle may be at least partially occluding the FOV of the first autonomous vehicle. In this regard, the remote autonomous vehicle may prevent the first autonomous vehicle from detecting one or more additional objects in the environment as the one or more additional objects may be occluded, fully or partially, by the remote autonomous vehicle. For example, the first autonomous vehicle may be located at an intersection where the remote autonomous vehicle is disposed adjacent to the first autonomous vehicle. In such an example, the remote autonomous vehicle may be between the first autonomous vehicle and one or more additional objects such as a traffic light of the intersection and occluding at least a portion of the traffic light.

At block 720, the method further includes transmitting, via one of a plurality of transmitters of an OPA architecture of the first autonomous vehicle, an optical communications signal to the detected object. In this regard, the one or more processors 104 of the first autonomous vehicle may transmit an optical communications signal 20a via one of the plurality of transmitters of the OPA architecture 114. The signal may be sent via the full array transmitter 514 or one of the plurality of segment transmitters 508a-d. The plurality of segments 502a-d of the OPA or one of the plurality of segments of the OPA may achieve a desired pointing direction for the transmission of the optical communications signal. In this regard, the one or more processors 104 may calculate a phase shift for each segment of the OPA architecture to achieve the desired pointing direction. For instance, the one or more processors may determine a shift for each phase shifter in the plurality of segments or one of the plurality of segments of the OPA architecture based on the desired pointing direction. The desired pointing direction may correspond to the location of the detected object. In some instances, the optical communications signal may be modulated such that it has a unique wavelength. In this regard, interference between the optical communications signal and differing optical communications signals may be reduced.

At block 730, the method further includes receiving, via one of a plurality of receivers of the OPA architecture of the first autonomous vehicle, an optical communications signal from the detected object, wherein the optical communications signal from the detected object includes information regarding the environment of the first vehicle. In this regard, the one or more processors 104 of the first autonomous vehicle may receive an optical communications signal 20b from the detected object via one of a plurality of receivers 514, 508a-d of the OPA architecture 114. The optical communications signal may be received via the full array receiver 514 or one of the plurality of segment receivers 508a-d. The optical communications signal may include information regarding the environment of the first autonomous vehicle. In some instances, the information may pertain to an area of the environment occluded by the detected object. Continuing from the above example, where the detected object is a remote autonomous vehicle between the first autonomous vehicle and a traffic light of the intersection and occluding at least a portion of the traffic light. The optical communications signal may include information regarding the current status (e.g., red, yellow, green, etc.) of the at least partially occluded traffic light. Additionally, upon receipt of the optical communications signal, a transceiver switch 310 may be placed in the second position (e.g., by one or more processors 104). The second position may allow for a signal to be received by the optical communications receiver 314.

As discussed above, in some implementations, the plurality of transmitters and plurality of receivers may be a plurality of transceivers. In this regard, the plurality of transceivers may include a full segment transceiver and a plurality of segment transceivers.

In some implementations, transmitting, via one of a plurality of transmitters of an OPA architecture of the first autonomous vehicle, an optical communications signal to the detected object may include transmitting a plurality of optical communications signals. In this regard, each of the first plurality of optical communications signals may be dithered according to an orthogonal set of functions as discussed above.

In some implementations, the detected object may be a plurality of objects. The plurality of objects may be a plurality of remote autonomous vehicles each at least partially occluding the FOV of the first autonomous vehicle. In such an example, the method may further include placing a plurality of switches of the OPA architecture of the first autonomous vehicle into a second position, wherein the second position allows for independent functionality of the plurality of segments. In such an instance, the one or more processors 104 of the first autonomous vehicle may place the plurality of switches 506a-d in the second position. In the second position, the plurality of segments may function independently (i.e., be driven separately to transmit and receive signals).

In some instances, transmitting, via one of the plurality of transmitters of an OPA architecture of the first autonomous vehicle, the optical communications signal to the detected object may include transmitting a plurality of optical communications signals to a plurality of detected objects. Similarly, receiving, via one of a plurality of receivers of the OPA architecture of the first autonomous vehicle, the optical communications signal from the detected object may include receiving a plurality of optical communications signals from a plurality of detected objects. In this regard, each of the plurality of segments 502a-d may transmit and receive signals to one of the objects of the plurality of detected objects. The transmission and receipt of signals may allow the first autonomous vehicle to obtain information regarding areas of the environment that are fully or partially occluded by the plurality of detected objects.

The features and methodology described herein may provide a first device able to transmit and receive both optical communications signals and LIDAR signals using the same components. Such a device allows for both communications functionality (e.g., transmission and receipt of optical communications signals) as well as LIDAR functionality (e.g. transmission of LIDAR signals and receipt of reflected LIDAR signals) with lesser components, materials, and overall cost. In this regard, devices such as the first device require less materials to construct and are easier to maintain overall. The first device may also have additional benefits from simultaneous multi-node, multi-code and multi-wavelength capability. In addition, the OPA aperture can be dynamically reconfigured from a single to multiple sub-apertures each with tailorable and optimizable LIDAR and/or communications functionality. This may enable different information flows for communication channels, LIDAR functionality with different spatial frequencies, and/or different unambiguous range bins among multiple communication targets (e.g., remote device or client device) or LIDAR targets (e.g., objects in the FOV of the first device).

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A first device comprising:
an optical phased array (OPA) including a photonic integrated circuit (PIC) comprising:
a plurality of phase shifters arranged in a plurality of segments;
one or more additional phase shifters,
a plurality of switches corresponding to each of the plurality of segments; and
a plurality of switches corresponding to each of the plurality of segments, the plurality of switches configured to be placed in one of i) a first position or ii) a second position, wherein the first position allows for joint functionality of the plurality of segments and wherein the second position allows for independent functionality of the plurality of segments; and
a plurality of transceivers, each of the plurality of transceivers comprising a transceiver switch, wherein each a transceiver switch is configured to be placed in in one of i) a first position or ii) a second position, wherein the first position allows for a signal to be received by a LIDAR receiver of the plurality of transceivers and the second position allows for a signal to be received by an optical communications receiver of the plurality of transceivers.

2. The first device of claim 1, wherein the first device is an autonomous vehicle.

3. The first device of claim 1 or claim 2, wherein the plurality of transceivers includes a full array transceiver and a plurality of segment transceivers.

4. The first device of any preceding claim, wherein the plurality of transceivers each further includes:
a laser source configured to produce a signal, and
a phase modulator operatively connected to the laser source and configured to encode signal information onto signals therefrom.

5. The first device of claim 4, wherein the plurality of transceivers each further includes:
a local oscillator (LO) phase modulator for LIDAR configured to modulate received signals using light from the laser source, and
a LO phase modulator for optical communications configured to modulate received signals using light from the laser source, and optionally wherein the plurality of transceivers each further includes:
wavelength and phase locking electronics operatively coupled to the LO phase modulator for LIDAR signals and the LO phase modulator for optical communications and configured to allow specific ranges of wavelengths or specific phases of photons of a signal to be received.

6. The first device of any preceding claim, wherein the plurality of transceivers each further includes:
a LIDAR receiver configured to receive LIDAR signals when the transceiver switch is in the first position; and
an optical communications receiver configured to receive optical communications signals when the transceiver switch is in the second position.

7. The first device of any preceding claim, wherein the plurality of transceivers each further includes:
one or more semiconductor optical amplifiers configured to amplify a signal to be transmitted.

8. The first device of any preceding claim, wherein the plurality of transceivers each further includes:
a circulator configured to route incoming and outgoing signals while keeping them on at least partially separate paths.

9. The first device of any preceding claim, wherein the plurality of transceivers each include separate transmitter and receiver components, and optionally wherein the transmitter components of the plurality of transceivers are contained on a first PIC and the receiver components of the plurality of transceivers are contained on a second PIC.

10. A method of detecting a plurality of objects in an environment of a first autonomous vehicle, the method comprising:
placing a plurality of switches of an optical phased array (OPA) architecture of the first autonomous vehicle into a first position wherein the first position allows for joint functionality of a plurality of segments, wherein a plurality of phase shifters are arranged in the plurality of segments;
transmitting, via a full array transmitter of the OPA architecture of the first autonomous vehicle, a first LIDAR signal, the first LIDAR signal spanning a field of view (FOV) of an OPA architecture of the first autonomous vehicle;
receiving, via a full array receiver of the OPA architecture of the first autonomous vehicle, a first reflected LIDAR signal, the first reflected LIDAR signal being a reflection of the first LIDAR signal containing information regarding objects in the environment of the first autonomous vehicle;
identifying, by one or more processors of the first autonomous vehicle, a plurality of areas of interest in the environment of the first autonomous vehicle based on the first reflected LIDAR signal;
placing a plurality of switches of the OPA architecture of the first autonomous vehicle into a second position, wherein the second position allows for independent functionality of the plurality of segments;
driving, by the one or more processors of the first autonomous vehicle, the plurality of phase shifters of the plurality of segments, such that a FOV of each segment corresponds to one of the plurality of areas of interest;
transmitting, via a plurality of segment transmitters of the OPA architecture of the first autonomous vehicle, a plurality of LIDAR signals, the plurality of LIDAR signals each spanning the FOV of each corresponding segment;
receiving, via a plurality of segment receivers of the OPA architecture of the first autonomous vehicle, a reflected plurality of LIDAR signals, the reflected plurality of LIDAR signals being reflections of the plurality of LIDAR signals containing information regarding a plurality of objects in the plurality of areas of interest; and
detecting the plurality of objects in the environment of the first autonomous vehicle based on the reflected plurality of LIDAR signals.

11. The method of claim 10, wherein the full array transmitter and receiver are a full array transceiver and the segment transmitters and segment receivers are segment transceivers.

12. The method of claim 10 or claim 11, wherein:
transmitting, via the full array transmitter of the OPA architecture of the first autonomous vehicle, the first LIDAR signal includes transmitting a plurality of first LIDAR signals; and
receiving, via the full array receiver of the OPA architecture of the first autonomous vehicle, the first reflected LIDAR signal includes receiving a first reflected plurality of LIDAR signals, and optionally further comprising dithering the first plurality of LIDAR signals.

13. A method of receiving information regarding an environment of a first vehicle, the method comprising:
detecting an object in an environment of a first autonomous vehicle, wherein the object is a remote autonomous vehicle, the remote autonomous vehicle is at least partially within a FOV of an OPA architecture of the first autonomous vehicle, and wherein the detecting occurs while one or more of a plurality of transceiver switches are in a first position, the first position allowing for a signal to be received by a LIDAR receiver;
transmitting, via one of a plurality of transmitters of an OPA architecture of the first autonomous vehicle, an optical communications signal to the detected object; and
receiving, via one of a plurality of receivers of the OPA architecture of the first autonomous vehicle, an optical communications signal from the detected object, wherein the optical communications signal from the detected object includes information regarding the environment of the first vehicle.

14. The method of claim 13, wherein, the remote autonomous vehicle is at least partially occluding the FOV of the first autonomous vehicle.

15. The method of claim 16, wherein:
receiving, via one of the plurality of receivers of the OPA architecture of the first autonomous vehicle, the optical communications signal from the detected object occurs when one or more or more of the plurality of transceiver switches is in a second position, the second position allowing for a signal to be received by an optical communications receiver,
and/or wherein transmitting, via one of the plurality of transmitters of an OPA architecture of the first autonomous vehicle, the optical communications signal to the detected object includes transmitting a plurality of optical communications signals to the detected object, and optionally further comprising dithering the plurality of optical communications signals.
